# EUROPEAN PATENT APPLICATION

(11) **EP 3 343 050 A1**
(43) Date of publication of application: **04.07.2018**
(21) Application number: 16840874.8
(22) Date of filing: 26.08.2016
(51) Int. Cl.: F16C 11/10, F16C 11/04

(54) **ARTICULATED CONNECTION FOR THREE-DIMENSIONAL STRUCTURES**

(30) Priority: 28.08.2015 ES 201531235
(71) Applicant: Mi Refugio Infantil, S.L., 18140 La Zubia (Granada) (ES)
(72) Inventor: GARCIA CORREDOR, Andrey, Vladimir, 18140 La Zubia (Granada) (ES); MEDINA QUERO, Patricia, 18140 La Zubia (Granada) (ES)
(74) Representative: Herrero & Asociados, S.L.
(86) International application number: PCT/ES2016/070613
(87) International publication number: WO 2017/037320

(57) **Abstract**

The invention relates to an articulated joint for three-dimensional structures, which comprises: a pair of extensions (1, 2) configured for being coupled to a pair of structural elements, respectively; a longitudinal securing part (5) which is coupled to both extensions (1, 2) through the clamping thereof with respect to said extensions (1, 2); preventing the extraction of the first extension (1) with respect to the second extension (2) in a direction of the virtual axis of rotation of the extensions (1, 2); and a rotation blocking part (6) for blocking rotation of both extensions (1, 2), which has a base (6a) and a shaft (6b) having a polygonal section; where said shaft (6b) is introduced into a first hole (3b) of the first extension (1) until being interlocked in a second hole (4b) of the second extension (2); where the polygonal geometry of the shaft (6b) is interlocked in the polygonal geometry of the holes (3b, 4b) of both extensions (1, 2), preventing the free rotation of both extensions (1, 2).

## Description

### Technical Field of the Invention

The present invention relates to an articulated joint for three-dimensional structures, which is comprised in the field of design, industrial design, furniture, architecture, and construction, as well as in the field of education-teaching.

The main purpose of the articulated joint object of the invention is to provide a type of joint suitable for the use of constructions and structures which allows providing a high degree of flexibility to the joint between structural elements with respect to the orientation between them, where it can be easily and simply positioned at different angles in a manner that can be readily changed by the user at will, without having to take apart the structure or replace the joint part as such. The invention allows all this with a joint formed by robust entities that are perfectly susceptible to being used in any type of three-dimensional structures existing today.

### Background of the Invention

By way of introduction, different types of three-dimensional constructions used in the fields of education, design, architecture, etc., are known, in which the user joins to one another one-dimensional structural elements, such as bars, or two-dimensional structural elements, such as plates, through joints pertaining to the actual assembly of elements constituting the three-dimensional construction as such.

In this sense, the joints are normally of the fixed type, such that they allow joining to one another two, three, and even four structural elements, where normally in the case of a joint for two structural elements, the fixed angle between them is 90 degrees; in the joint for three structural elements, the angle between two pairs of structural elements is 90 degrees, with the third pair being located at 180° between both structural elements; and in the joint of four structural elements, the angle between each contiguous structural element is 90 degrees.

The user can thereby make multiple constructions of three-dimensional structures by interchanging the fixed joints between respective structural elements, but it must be pointed out that there is a design limitation as regards the impossibility of using joints between structural elements with angles different from those that are pre-established by said joints, preventing the development of more innovative constructions or constructions other than those initially pre-established.

Furthermore, it must be pointed out that when a user wishes to modify the geometry of part of the three-dimensional structure that is constructed, having to replace said fixed joint with another one that complies with structural element orientation needs desired by the user in question, as well as partially or completely taking the structure apart in order to put it back together, are indispensable requirements.

The use of flexible joints is known to solve some of said drawbacks, which flexible joints have two couplings or extensions with respect to the structural elements, where each extension is attached to the contiguous extension through a hinge-type axis of rotation, so there is a free positioning of one extension with respect to the other extension as regards an angular measurement between respective extensions. The user can thereby arrange structural elements positioned at angles other than those previously indicated, as there are no fixed joints as such.

Said type of flexible joints in turn have a drawback in relation to how to block the free rotation of a structural element, and its extension of the associated joint, with respect to another structural element, and its extension of the same associated joint. In the case of triangulated structures, there is no problem because the actual geometry of these structures prevents the relative movement between the structural elements forming it, but in structures having more than three structural elements, such as four-bar linkages, at least one of the joints has to be blocked so that the structure is not transformed into a mechanical linkage.

Therefore, in view of the drawbacks relating to how to arrange articulated joints in which the position thereof is susceptible to being fixed in a quick and effective manner without having to use fixed joints that limit the possible constructions to be made by the user, there is required a new articulated joint for three-dimensional structures susceptible to allowing the free rotation of the structural elements coupled to said joint and fixing the angular position with respect to one another in a simple manner, without having to take the structure apart or replace the joint part as such. The invention allows all this with a joint formed by robust entities that are susceptible to being used in any type of three-dimensional structures existing today, which can be perfectly adapted to the field of education, and which is novel with respect to the state of the art known up until now.

### Description of the Invention

The present invention relates to an articulated joint for three-dimensional structures, which comprises a pair of extensions configured for being coupled to a pair of structural elements, respectively, where both extensions have respective cylinders configured for being coupled to one another through a tongue and groove joint, allowing the free rotation of both extensions with respect to a virtual axis of rotation coinciding with the axis of both cylinders. The joint object of the invention additionally comprises:
- a longitudinal securing part, which is coupled both to the first extension and to the second extension through the clamping thereof with respect to the ends of both cylinders of the respective extensions, preventing the extraction of the first extension with respect to the second extension in the direction of the virtual axis of rotation; and
- a rotation blocking part for blocking rotation of both extensions, which has a base and a shaft having a polygonal section; where said shaft is introduced into a first hole having a polygonal geometry made in the cylinder of the first extension, until being interlocked in a second hole having a polygonal geometry made in the cylinder of the second extension; where the polygonal geometry of the shaft is interlocked in the polygonal geometry of both extensions, preventing the free rotation of both extensions.

It can thereby be observed that the articulated joint for three-dimensional structures object of the invention has a series of physical entities where each one has a key function for allowing free rotation of a first extension with respect to a second extension, through the virtual axis of rotation of both cylinders, for the user to subsequently block the rotation at will as a result of the rotation blocking part for blocking rotation both extensions; and where to prevent the accidental detachment of the first and second extensions, and of the rotation blocking part blocking the rotation of said extensions, a longitudinal securing part for securing said parts is provided, acting as a result of the clamping thereof with respect to the ends of the cylinders of each extension.

A method for the assembly of the described articulated joint for three-dimensional structures can thereby be described, where said method comprises the following steps:
a) arranging the first extension on a planar surface;
b) coupling the respective cylinders of the pair of extensions through the tongue and groove joint, where the second extension is also arranged on said planar surface;
c) coupling the longitudinal securing part through the clamping thereof with respect to the ends of both cylinders of the respective extensions;
d) orienting the first extension with respect to the second extension at a given angle for the purpose of then
e) introducing the rotation blocking part for blocking rotation of both extensions through the first hole having a polygonal geometry made in the cylinder of the first extension, until being interlocked in the second hole having a polygonal geometry made in the cylinder of the second extension.

The user can therefore arrange the joints and associated structural elements on a planar surface to subsequently block the joints and the angular positions of each structural element at will by simply rotating the structural elements, and then introducing the rotation blocking parts for blocking rotation of the extensions in a sequential manner, giving rise to an infinite number of three-dimensional construction possibilities, because unlike the state of the art indicated above, the joints are completely articulated and susceptible to being blocked by the user at will; this is because as a result of the polygonal geometry of the shaft of the rotation blocking part for blocking rotation of the extensions, and the holes of the cylinders of said extensions, which also have a polygonal geometry, the structural elements used in each joint are angularly positioned and blocked.

It can also be observed that when the user decides to change the orientation of a structural element, the entire joint does not have to be taken out for that purpose, but rather by simply taking out the rotation blocking part for blocking rotation of the extensions, the desired structural element can be reoriented and the rotation blocking part for blocking rotation of the extensions can be introduced back in again. This is a very quick operation that does not require partially or completely taking apart the entire three-dimensional structure constructed by the user.

It must be clarified that the polygonal geometry of the shaft of the rotation blocking part for blocking rotation of the extensions, as well as the holes located in the cylinders of the extensions, is such that there is contact between faces between each side of the polygonal geometry of the shaft with each side of the polygonal geometry of the corresponding holes, where the geometries may be non-polygonal, e.g., they may be formed by honeycomb-type curved elements, the blocking function of which is exactly the same as that having a polygonal section, where the larger the number of sides, the larger the number of angular blocking positions between the structural elements participating in the articulated joint object of the invention.

In this sense, the possibility of the rotation blocking part for blocking rotation of both extensions having a base having a spherical cap geometry, and the shaft having a star polygon-type polygonal section, is emphasized, where each arm of said polygon and the complementary cavity existing in the holes of the cylinders of both extensions define an angular position between respective extensions. This is a simple and very effective solution for firmly and securely blocking the associated structural elements.

In a preferred embodiment in which a third structural element is to be associated with the articulated joint object of the invention, it is described that the longitudinal securing part has a third extension configured for being coupled to said third structural element, giving rise to an articulated joint for the coupling to three structural elements. Said joint substantially increases the possibilities of forming three-dimensional constructions, because in this case the joint has three extensions suitable for being coupled to the desired structural elements, where at least one pair of said extensions are blocked by the user at will in a simple and effective manner, where all three can be blocked.

As for how to present an embodiment of the longitudinal securing part, said part can have two rings and a bracing element between them, where each ring is coupled, respectively, to part of the outer contour of the cylinder of the first extension, and to the cylinder of the second extension. Clamping between both extensions thereby takes place, which prevents them from being able to separate from one another in a direction of the virtual axis of rotation once they are coupled together through the tongue and groove joint of the respective cylinders of respective extensions. A complete three-dimensional blocking of the joint object of the invention is thereby assured.

Furthermore, the invention specifically contemplates the possibility in which the ring of the longitudinal securing part configured for being coupled to the outside of the cylinder of the first extension has a covering in the form of a spherical cap, such that it closes the articulated joint object of the invention on one side, because the rotation blocking part for blocking rotation of the extensions is introduced on the other side, there being no nooks and crannies or holes that may deteriorate or foul up the articulated joint object of the invention.

Finally, and in relation to how the coupling of the extensions with respect to the structural elements can be carried out, the preferred option in which each extension has at least one pair of elastically deformable prolongations suitable for being deformed and introduced into respective cavities of the structural elements to be coupled is described. This coupling is widely used today and therefore assures that it is easy to implement joints of this type in structural elements used today.

Each extension can also have, between each deformable prolongation of each pair, a guide for the interlocking with the structural element to be coupled; thereby assuring correct coupling between each extension and each structural element.

Therefore, the proposed invention obtains an articulated joint for three-dimensional structures that is perfect for being used in the field of childhood education, as well as in the field of furniture, architecture, industrial design, and construction; which allows the user to easily and simply angularly position two or three structural elements in a manner that can be readily changed at will, without having to take the structure apart or replace the joint part as such; The invention allows all this with a joint formed by robust entities that are perfectly susceptible to being used in any type of three-dimensional structures existing today.

### Description of the Drawings

To complement the description that is being made and for the purpose of helping to better understand the features of the invention according to a preferred practical embodiment thereof, a set of drawings is attached as an integral part of said description, in which the following is depicted with an illustrative and nonlimiting character:
Figure 1 shows a three-dimensional view of the first extension of the articulated joint for three-dimensional structures object of the invention.
Figure 2 shows a three-dimensional view of the second extension of the articulated joint for three-dimensional structures object of the invention.
Figure 3 shows a three-dimensional view of a first embodiment option of the longitudinal securing part to be coupled in the first and second extensions of the articulated joint for three-dimensional structures object of the invention.
Figure 4 shows a three-dimensional view of the rotation blocking part for blocking rotation of both extensions, where said blocking part is housed in the holes of the cylinders corresponding to each extension.
Figure 5 shows a three-dimensional view of the first embodiment option of the articulated joint for three-dimensional structures object of the invention, with two extensions prepared for being coupled to two structural elements.
Figure 6 shows a three-dimensional view of a second embodiment option of the longitudinal securing part to be coupled in the first and second extensions of the articulated joint for three-dimensional structures object of the invention, which has a third extension.
Figure 7 shows a three-dimensional view of the second embodiment option of the articulated joint for three-dimensional structures object of the invention, with three extensions prepared for being coupled to three structural elements.

### Preferred Embodiment of the Invention

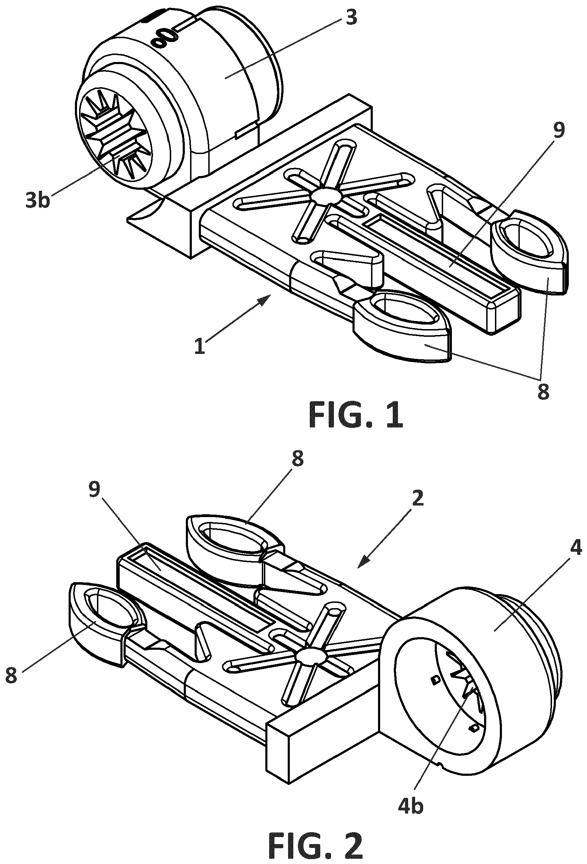

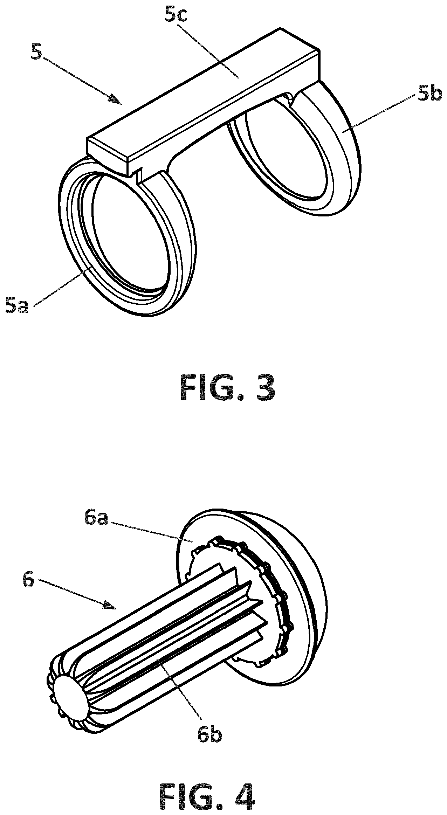

In view of Figures 1 to 5, it can be observed how the articulated joint for three-dimensional structures comprises the following physical entities:
- A first extension (1), which can be seen in Figure 1 and is configured for being coupled to a structural element through a pair of elastically deformable prolongations (8) suitable for being deformed and introduced into respective cavities of the structural elements to be coupled; as well as a guide (9) for the interlocking with the structural element to be coupled located between the pair of deformable prolongations (8); where said first extension (1) has a cylinder (3) in turn having a first hole (3b) having a star polygon geometry, which is made on the axis of the cylinder (3) of the first extension (1).
- A second extension (2), which can be seen in Figure 2, where said second extension (2) is configured for being coupled to a structural element through a pair of elastically deformable prolongations (8) suitable for being deformed and introduced into respective cavities of the structural elements to be coupled; as well as a guide (9) for the interlocking with the structural element to be coupled located in between the pair of deformable prolongations (8); where said second extension (2) has a cylinder (4) in turn having a first hole (4b) having a star polygon geometry, which is made on the axis of the cylinder (4) of the second extension (2); and where both extensions (1, 2) have respective cylinders (3, 4) configured for being coupled to one another through a tongue and groove joint, allowing the free rotation of both extensions (1, 2) with respect to a virtual axis of rotation coinciding with the axis of both cylinders (3, 4).
- A longitudinal securing part (5), which can be seen in Figure 3, and where the longitudinal securing part (5) is coupled both to the first extension (1) and to the second extension (2) through the clamping thereof with respect to the ends of both cylinders (3, 4) of the respective extensions (1, 2); preventing the extraction of the first extension (1) with respect to the second extension (2) in the direction of the virtual axis of rotation, since said longitudinal securing part (5) has two rings (5a, 5b) and a bracing element (5c) between them, where each ring (5a, 5b) is coupled, respectively, to part of the outer contour of the cylinder (3) of the first extension (1), and to the cylinder (4) of the second extension (2); and where the ring of the longitudinal securing part (5) configured for being coupled to the outside of the cylinder (4) of the second extension (2) has a covering in the form of a spherical cap.
- A rotation blocking part (6) for blocking rotation of both extensions (1, 2), which can be seen in Figure 4, where said part has a base (6a) and a shaft (6b) having a polygonal section; where said shaft (6b) is introduced into the first hole (3b) having a polygonal geometry made in the cylinder (3) of the first extension (1), until being interlocked in the second hole (4b) having a polygonal geometry made in the cylinder (4b) of the second extension (2); where the polygonal geometry of the shaft (6b) is interlocked in the polygonal geometry of the holes (3b, 4b) of both extensions (1, 2), preventing the free rotation of both extensions (1, 2); and where the rotation blocking part (6) for block rotation of both extensions (1, 2) has a base (6a) having a spherical cap geometry, and the shaft (6b) has a star polygon section where each arm of said polygon and the complementary cavity existing in the holes (3b, 4b) of the cylinders (3, 4) of both extensions (1, 2) define an angular position between respective extensions (1, 2).

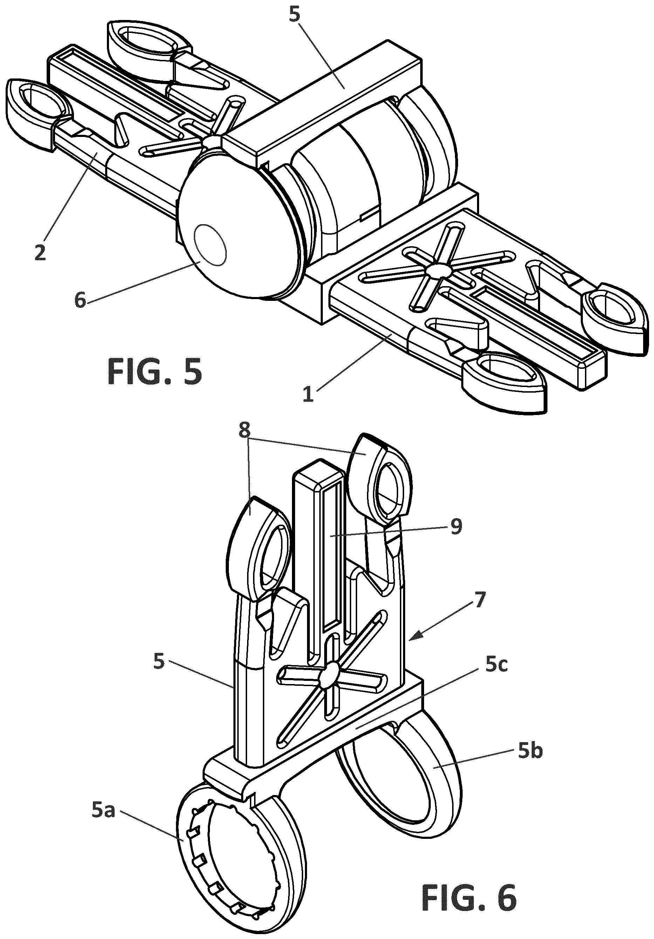

The method for the assembly of the articulated joint for described three-dimensional structures can thereby be described, where said method comprises the following steps:
a) arranging the first extension (1) on a planar surface;
b) coupling the respective cylinders (3, 4) of the pair of extensions (1, 2) through the tongue and groove joint, where the second extension (2) is also arranged on said planar surface;
c) coupling the longitudinal securing part (5) through the clamping thereof with respect to the ends of both cylinders (3, 4) of the respective extensions (1, 2);
d) orienting the first extension (1) with respect to the second extension (2) at a given angle for the purpose of then
e) introducing the rotation blocking part (6) for blocking rotation of both extensions (1, 2) through the first hole (3b) having a polygonal geometry made in the cylinder (3) of the first extension (1), until being interlocked in the second hole (4b) having a polygonal geometry made in the cylinder (4) of the second extension (2), see Figure 5.

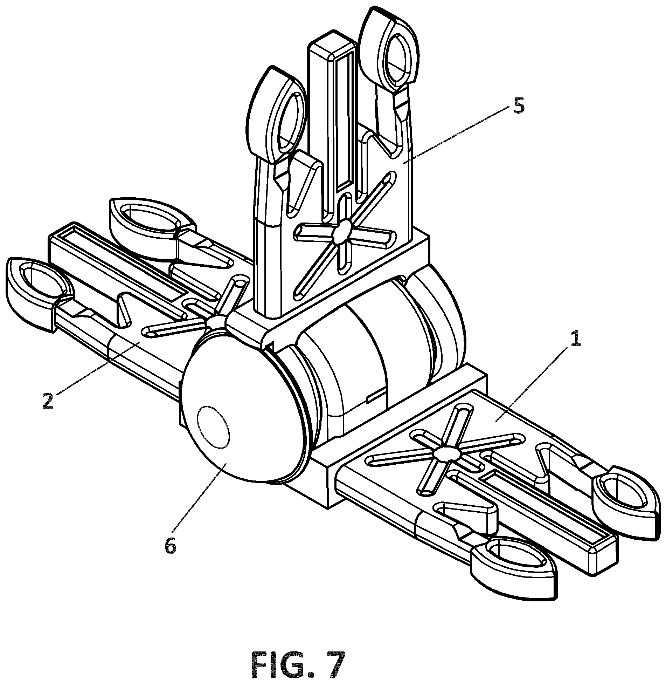

Next, it can be seen in Figures 6 and 7 how the longitudinal securing part (5) has a third extension (7) configured for being coupled to a third structural element, giving rise to an articulated joint for the coupling to three structural elements and enriching the spatial three-dimensional possibilities of the entire three-dimensional structure, and where the longitudinal securing part (5) can also can readily be included or taken apart by simply elastically deforming it until decoupling the clamping thereof with respect to the ends of both cylinders (3, 4) of the respective extensions (1, 2).

In view of this description and set of drawings, one skilled in the art will understand that the embodiments of the invention that have been described can be combined in many ways within the object of the invention. The invention has been described according to several preferred embodiments thereof, but for one skilled in the art it will be obvious that many variations can be introduced in said preferred embodiments without exceeding the object of the claimed invention.

## Claims

1. Articulated joint for three-dimensional structures, which comprises a pair of extensions (1, 2) configured for being coupled to a pair of structural elements, respectively, where both extensions (1, 2) have respective cylinders (3, 4) configured for being axially coupled with one another through a tongue and groove joint, allowing the free rotation of both extensions (1, 2) with respect to an axis of rotation, **characterized in that** it additionally comprises:
- a longitudinal securing part (5) which can be coupled to the first extension (1) and to the second extension (2) by means of contact with the ends of both cylinders (3, 4) of the respective extensions (1, 2), to prevent the extraction of the first extension (1) with respect to the second extension (2) in the direction of the axis of rotation; and
- a rotation blocking part (6) for blocking rotation of both extensions (1, 2) which can be coupled to the cylinders (3, 4) and configured for blocking the relative rotation between both cylinders about said axis of rotation.

2. Articulated joint for three-dimensional structures according to claim 1, **characterized in that** the rotation blocking part (6) has a base (6a) and a shaft (6b) having a polygonal section; where said shaft (6b) is introduced into a first hole (3b) having a polygonal geometry made in the cylinder (3) of the first extension (1), until being interlocked in a second hole (4b) having a polygonal geometry made in the cylinder (4b) of the second extension (2); where the polygonal geometry of the shaft (6b) is interlocked in the polygonal geometry of the holes (3b, 4b) of both extensions (1, 2), preventing the free rotation of both extensions (1, 2).

3. Articulated joint for three-dimensional structures according to claim 1, **characterized in that** the longitudinal securing part (5) has a third extension (7) configured for being coupled to a third structural element, giving rise to an articulated joint for the coupling to three structural elements.

4. Articulated joint for three-dimensional structures according to any of the preceding claims, **characterized in that** the longitudinal securing part (5) has two rings (5a, 5b) and a bracing element (5c) between them, where each ring (5a, 5b) is coupled, respectively, to part of the outer contour of the cylinder (3) of the first extension (1), and to the cylinder (4) of the second extension (2).

5. Articulated joint for three-dimensional structures according to claims 1 and 3, **characterized in that** the ring of the longitudinal securing part (5) configured for being coupled to the outside of the cylinder (4) of the second extension (2) has a covering in the form of a spherical cap.

6. Articulated joint for three-dimensional structures according to any of the preceding claims, **characterized in that** the rotation blocking part (6) for blocking rotation of both extensions (1, 2) has a base (6a), and the shaft (6b) has a polygonal section, where each arm of said polygon and the complementary cavity existing in the holes (3b, 4b) of the cylinders (3, 4) of both extensions (1, 2) define an angular position between respective extensions (1, 2).

7. Articulated joint for three-dimensional structures according to any of the preceding claims, **characterized in that** each extension (1, 2, 7) has at least one pair of elastically deformable prolongations (8) suitable for being deformed and introduced into respective cavities of the structural elements to be coupled.

8. Articulated joint for three-dimensional structures according to claim 6, **characterized in that** each extension (1, 2, 7) has, between each deformable prolongation (8) of each pair, a guide (9) for the interlocking with the structural element to be coupled.

9. Method for the assembly of the articulated joint for three-dimensional structures defined in any of the preceding claims, **characterized in that** it comprises the following steps:
a) arranging the first extension (1) on a planar surface;
b) coupling the respective cylinders (3, 4) of the pair of extensions (1, 2) through the tongue and groove joint, where the second extension (2) is also arranged on said planar surface;
c) coupling the longitudinal securing part (5) through the clamping thereof with respect to the ends of both cylinders (3, 4) of the respective extensions (1, 2);
d) orienting the first extension (1) with respect to the second extension (2) at a given angle for the purpose of then
e) introducing the rotation blocking part (6) for blocking rotation of both extensions (1, 2) through the first hole (3b) having a polygonal geometry made in the cylinder (3) of the first extension (1), until being interlocked in the second hole (4b) having a polygonal geometry made in the cylinder (4) of the second extension (2).
